# EUROPÄISCHE PATENTSCHRIFT

(11) **EP 2 222 979 B1**
(45) Veröffentlichungstag und Bekanntmachung des Hinweises auf die Patenterteilung: **22.02.2012**
(21) Anmeldenummer: 08863660.0
(22) Anmeldetag: 08.12.2008
(51) Int. Cl.: F16H 1/46, B60K 6/48, B60K 6/52, B60K 23/04, F16H 48/10

(54) **GETRIEBEVORRICHTUNG MIT WENIGSTENS ZWEI AUSGANGSWELLEN**
TRANSMISSION DEVICE COMPRISING AT LEAST TWO OUTPUT SHAFTS
SYSTÈME DE BOÎTE DE VITESSES POURVU D'AU MOINS DEUX ARBRES DE SORTIE

(30) Priorität: 20.12.2007 DE 102007055883
(43) Veröffentlichungstag der Anmeldung: 01.09.2010
(73) Patentinhaber: ZF Friedrichshafen AG, 88038 Friedrichshafen (DE); Forschungsgesellschaft für Zahnräder und Getriebe mbH, 85748 Garching (DE)
(72) Erfinder: PELCHEN, Christoph, 88069 Tettnang (DE); ROSEMEIER, Thomas, 88074 Meckenbeuren (DE); HÖHN, Bernd-Robert, 81925 München (DE)
(86) Internationale Anmeldenummer: PCT/EP2008/066980
(87) Internationale Veröffentlichungsnummer: WO 2009/080475

(56) Entgegenhaltungen:
- EP-A- 1 787 846
- US-A- 6 098 737

## Beschreibung

Die Erfindung betrifft eine Getriebevorrichtung mit zwei Ausgangswellen und mit genau zwei miteinander in Wirkverbindung stehenden mehrwelligen Planetenradsätzen gemäß der im Oberbegriff des Patentanspruches 1 näher definierten Art.

Aus der DE 10 2006 031 089.6 ist eine Antriebsvorrichtung für Kraftfahrzeuge zum Antrieb einer Fahrzeugachse eines Kraftfahrzeuges mit zwei Rädern, die über zwei Planetenradsätze miteinander in Wirkverbindung stehen, bekannt. Der erste Planetenradsatz ist als ein so genannter Stufenplanetenradsatz mit Stufenplaneten ausgeführt, während der zweite Planetenradsatz als ein so genannter Plusplanetenradsatz mit schaltbarer Wendestufe ausgebildet ist. Jeweils eine Welle eines Plartetenradsatzes ist mit einer mit einem Rad verbundenen Antriebswelle bzw. mit einer Ausgangswelle der Antriebsvorrichtung in Wirkverbindung bringbar. Darüber hinaus ist eine Schalteinrichtung vorgesehen, mittels welcher ein erster Leistungspfad oder ein zweiter Leistungspfad zwischen den Rädern der Fahrzeugachse zuschattbar ist.

Im Bereich einer weiteren Welle eines der Planetenradsätze ist ein Drehmoment einer elektrischen Maschine in den ersten oder den zweiten Leistungspfad einleitbar. Das Drehmoment der elektrischen Maschine ist bei geschaltetem ersten Leistungspfad zu gleichen Teilen und mit gleichen Vorzeichen und bei geschaltetem zweiten Leistungspfad zu gleichen Teilen mit unterschiedlichen Vorzeichen zu den Ausgangswellen bzw. den Rädern der Fahrzeugachse führbar, um im Bereich der Fahrzeugachse während eines ersten Betriebsmodus ein Antriebsmoment zur Verfügung zu stellen oder während eines zweiten Betriebsmodus zur Verbesserung eines Fahrverhaltens eines Fahrzeuges das von der elektrischen Maschine erzeugte Drehmoment zu gleichen Teilen jedoch mit unterschiedlichen Vorzeichen zwischen den Rädern der Fahrzeugachse zu verteilen und diesen zuzuführen.

Die Ausführung der Antriebsvorrichtung mit einem Stufenplanetenradsatz ist konstruktiv aufwändig und durch hohe Herstellkosten gekennzeichnet, was jedoch unerwünscht ist.

Eine Getriebevorrichtung mit zwei Ausgangswellen und genau zwei miteinander in Wirkverbindung stehenden mehrwelligen Planetenradsätzen ist aus der US 6 098 737 A bekannt. Jeweils eine Welle eines Planetenradsatzes ist mit einer Ausgangswelle in Wirkverbindung bringbar. Zusätzlich ist eine Schalteinrichtung vorgesehen, über welche zwischen einem ersten Leistungspfad oder einem zweiten Leistungspfad zwischen den Ausgangswellen umschaltbar ist, wobei im Bereich einer weiteren Welle eines der Planetenradsätze ein Drehmoment einer elektrischen Maschine in den ersten oder den zweiten Leistungspfad einleitbar ist. Das Drehmoment der elektrischen Maschine wird bei geschaltetem erstem Leistungspfad zu gleichen Teilen und bei gleichem Vorzeichen und bei geschaltetem zweitem Leistungspfad zu gleichen Teilen mit unterschiedlichen Vorzeichen zu den Ausgangswellen geführt.

Bei einer ersten Gruppe verschiedener Ausführungsformen der Getriebevorrichtung sind die beiden Planetenradsätze als Doppelplanetenradsätze ausgebildet. Weitere einer zweiten Gruppe angehörende Ausführungsformen der Getriebevonichtung umfassen jeweils zwei als Differentiale ausgebildete Planetenradsätze.

Des Weiteren ist aus der EP 1 787 846 A1 eine Getriebevorrichtung mit zwei Ausgangswellen und drei miteinander in Wirkverbindung stehenden mehrwelligen Planetenradsätzen bekannt. Dabei ist jeweils eine Ausgangswelle mit einer Welle eines Planetenradsatzes in Wirkverbindung bringbar. Zusätzlich ist eine Schalteinrichtung vorgesehen, über welche zwischen einem ersten Leistungspfad oder einem zweiten Leistungspfad zwischen den Ausgangswellen umschaltbar ist, wobei im Bereich einer weiteren Welle eines der Planetenradsätze ein Drehmoment einer elektrischen Maschine in den ersten oder den zweiten Leistungspfad einleitbar ist. Das Drehmoment der elektrischen Maschine wird bei geschaltetem erstem Leistungspfad zu gleichen Teilen und gleichem Vorzeichen und bei geschaltetem zweitem Leistungspfad zu gleichen Teilen mit unterschiedlichen Vorzeichen zu den Ausgangswellen geführl. Wenigstens einer der Planetenradsätze ist als einfacher Minusplanetenradsatz auszuführen. Dieser ist mit den zwei weiteren Planetenradsätzen zu kombinieren, um sowohl einen elektrischen Antrieb als auch eine Torque-Vectoring-Funktion darstellen zu können.

Der vorliegenden Erfindung liegt die Aufgabe zugrunde, eine Getriebevorrichtung mit zwei Ausgangswellen und genau zwei miteinander in Wirkverbindung stehenden mehrwelligen Planetenradsätzen zur Verfügung zu stellen, mit der die beiden vorbeschriebenen Betriebsmodi darstellbar sind und die einen einfachen konstruktiven Aufbau aufweist sowie kostengünstig herstellbar ist.

Erfindungsgemäß wird diese Aufgabe mit einer Getriebevorrichtung mit den Merkmalen des Patentanspruches 1 gelöst.

Die erfindungsgemäße Getriebevorrichtung ist mit zwei Ausgangswellen und mit genau zwei miteinander in Wirkverbindung stehenden mehrwelligen Planetenradsätzen ausgeführt. Jeweils eine Welle eines Planetenradsatzes ist mit einer Ausgangswelle der Getriebevorrichtung in Wirkverbindung bringbar. Zusätzlich ist eine Schalteinrichtung vorgesehen, über welche zwischen einem ersten Leistungspfad und einem zweiten Leistungspfad zwischen den Ausgangswellen der Getriebevorrichtung umschaltbar ist, wobei im Bereich einer weiteren Welle eines der Planetenradsätze ein Drehmoment einer elektrischen Maschine in den ersten oder den zweiten Leistungspfad einleitbar ist. Das Drehmoment der elektrischen Maschine wird bei zugeschaltetem ersten Leistungspfad bzw. im Antriebsmodus der Getriebevorrichtung zu gleichen Teilen und mit gleichen Vorzeichen und bei zugeschaltetern zweiten Leistungspfad bzw. im Torque-Vectoring-Betriebsmodus der Getriebevorrichtung zu gleiche Teilen mit unterschiedlichen Vorzeichen zu den Ausgangswellen geführt. Der len geführt. Der Planetenradsatz, in dessen Bereich das Drehmoment der elektrischen Maschine einleitbar ist, ist als einfacher Minusplanetenradsatz ausgebildet.

Mit der Getriebevorrichtung nach der Erfindung ist neben dem elektrischen Antriebsmodus auch ein Torque-Vectoring-Betriebsmodus im Bereich einer Fahrzeugachse durchführbar, wobei die vorgeschlagene Getriebevorrichtung aufgrund des Minusplanetenradsatz im Vergleich zu der aus dem Stand der Technik bekannten Antriebsvorrichtung einen einfacheren konstruktiven Aufbau aufweist und kostengünstiger herstellbar ist. Darüber hinaus sind die beiden Betriebsmodi, d. h. der Antriebsmodus und der Torque-Vectoring-Betriebsmodus, mit nur einer einzigen elektrischen Maschine darstellbar, wobei die Getriebevorrichtung neben einer kompakten Bauweise auch durch ein geringes Gesamtgewicht gekennzeichnet ist und über den gesamten Betriebsbereich mit einem hohen Wirkungsgrad betreibbar ist.

Vorliegend wird unter dem Begriff Minusplanetenradsatz oder Minusgetriebe ein Planetengetriebe mit negativer Standgetriebeübersetzung bezeichnet. Zusätzlich wird als Plusplanetenradsatz oder als Plusgetriebe ein Planetengetriebe mit positiver Standgetriebeübersetzung angesehen, wobei die Standgetriebeübersetzung das Verhältnis zwischen den Winkelgeschwindigkeiten bzw. den Drehzahlen der Zentralradwellen in einem Planetengetriebe bei stillstehendem oder als stillstehend gedachtem Steg darstellt.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugszeichen verwendet werden.

Es zeigt:
- Fig. 1: eine stark schematisierte Darstellung eines im Bereich einer Fahrzeughinterachse mit der erfindungsgemäßen Getriebevorrichtung ausgebildeten Fahrzeuges;
- Fig. 2: eine Fig. 1 entsprechende Darstellung eines Fahrzeuges, welches im Bereich einer Fahrzeugvorderachse mit der Getriebevorrichtung nach der Erfindung ausgeführt ist;
- Fig. 3: ein Räderschema eines ersten Ausführungsbeispieles der Getriebevorrichtung gemäß Fig. 1 und Fig. 2;
- Fig. 4: ein Räderschema eines zweiten Ausführungsbeispieles der Getriebevorrichtung gemäß Fig. 1 und Fig. 2;
- Fig. 5: eine dritte Ausführungsform der Getriebevorrichtung gemäß Fig. 1 und Fig. 2 mit einem Plusplanetenradsatz;
- Fig. 6: ein viertes Ausführungsbeispiel der Getriebevorrichtung gemäß Fig. 1 und Fig. 2; und
- Fig. 7: ein fünftes Ausführungsbeispiel der Getriebevorrichtung gemäß Fig. 1 und Fig. 2 mit einer zwischen einem Planetenradsatz und einer Ausgangswelle angeordneten Schalteinrichtung.

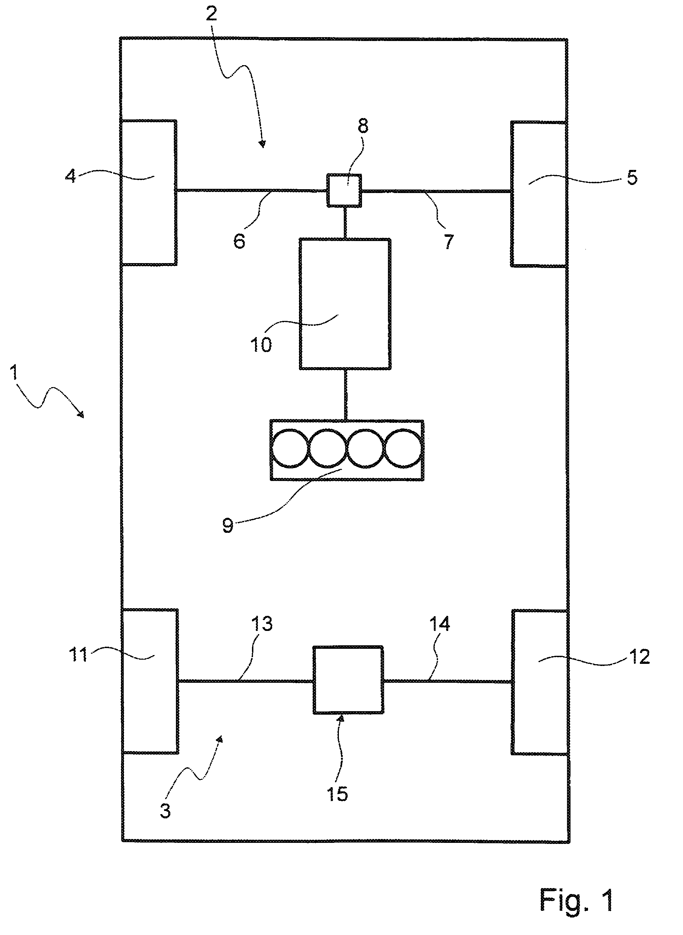

In Fig. 1 ist eine stark schematisierte Darstellung eines Fahrzeuges 1 mit einer ersten Fahrzeugachse 2 und einer zweiten Fahrzeugachse 3 gezeigt, wobei die erste Fahrzeugachse 2 eine Fahrzeugvorderachse und die zweite Fahrzeugachse 3 eine Fahrzeughinterachse des Fahrzeuges 1 darstellt. Die erste Fahrzeugachse 2 umfasst zwei Antriebsräder 4, 5, welche über zwei Antriebswellen 6, 7 mit einer Differenzialgetriebeeinheit 8 verbunden sind. Mittels der Differentialgetriebeeinheit 8 wird ein von einem vorliegend als Brennkraftmaschine ausgebildeten Antriebsaggregat 9 erzeugtes Antriebsmoment zu gleichen Teilen auf die beiden Antriebsräder 4 und 5 verteilt. Darüber hinaus ist zwischen dem Antriebsaggregat 9 und der Differenzialgetriebeeinheit 8 eine Getriebeeinrichtung 10 vorgesehen, die als Handschaltgetriebe, als Automatgetriebe oder als automatisiertes Handschaltgetriebe ausgeführt sein kann und mittels welcher in an sich bekannter Art und Weise verschiedene stufenlos einstellbare Übersetzungen oder Übersetzungsstufen darstellbar sind.

Die zweite Fahrzeugachse 3 umfasst ebenfalls zwei Antriebsräder 11, 12, die über zwei Antriebswellen 13, 14 und eine Getriebevorrichtung 15 miteinander in Wirkverbindung stehen, um im Bereich der zweiten Fahrzeugachse 3 während eines Antriebsmodus im Bereich der Antriebsräder 11, 12 ein Drehmoment zur Verfügung zu stellen oder während eines Torque-Vectoring-Betriebsmodus ein Fahrverhalten positiv beeinflussen zu können. Damit ist das Fahrzeug 1 gemäß Fig. 1 bei deaktivierter Getriebevorrichtung 15 frontgetrieben, während das Fahrzeug 1 im Antriebsmodus der Getriebevorrichtung 15 im Bereich beider Fahrzeugachsen angetrieben wird und damit einem vierradangetriebenen Fahrzeug entspricht. Wird die Antriebseinheit 9 deaktiviert, d. h., die Brennkraftmaschine steht, kann die aktivierte Getriebevorrichtung 15 das Fahrzeug antreiben. Handelt es sich bei dem Antriebsmotor der Getriebevorrichtung z. B. um einen Elektromotor, kann das Fahrzeug elektrisch gefahren werden (Hybridantrieb). Voraussetzung dafür ist ein entsprechend ausgelegter Energiespeicher. Im Torque-Vectoring-Betriebsmodus der Getriebevorrichtung 15 wird das Fahrzeug 1 im Bereich der Fahrzeugvorderachse angetrieben und das Fahrverhalten mit einer "aktiven" Fahrzeughinterachse beeinflusst.

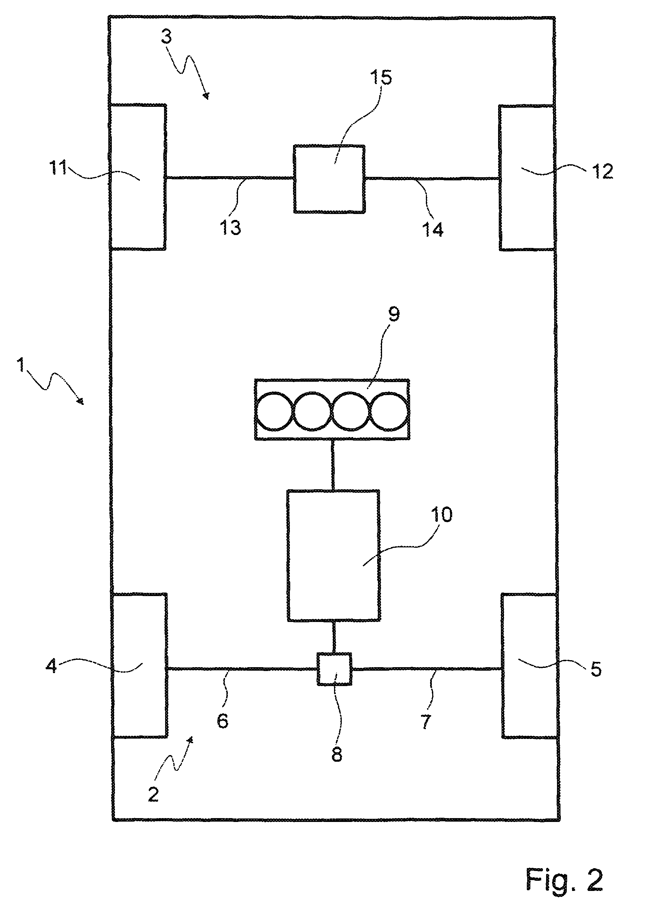

Bei dem in Fig. 2 dargestellten zweiten Ausführungsbeispiel des Kraftfahrzeuges 1 ist die erste Fahrzeugachse 2 die Fahrzeughinterachse und die zweite Fahrzeugachse 3 die Fahrzeugvorderachse des Kraftfahrzeuges 1, so dass das Fahrzeug bei inaktiver Getriebevorrichtung 15 als rein heckgetriebenes Fahrzeug zur Verfügung steht. Im Antriebsmodus der Getriebevorrichtung 15 wird das Fahrzeug 1 gemäß Fig. 2 wie das Fahrzeug gemäß Fig. 1 im Bereich beider Fahrzeugachsen 2 und 3 angetrieben (Allradantrieb) oder bei Stillstand der Brennkraftmaschine allein über die zweite Fahrzeugachse 3 (Hybridantrieb). Im Torque-Vectoring-Betriebsmodus der Getriebevorrichtung 15 beeinflusst neben dem Heckantrieb auch die "aktive" Fahrzeugvorderachse das Fahrverhalten des Fahrzeuges 1.

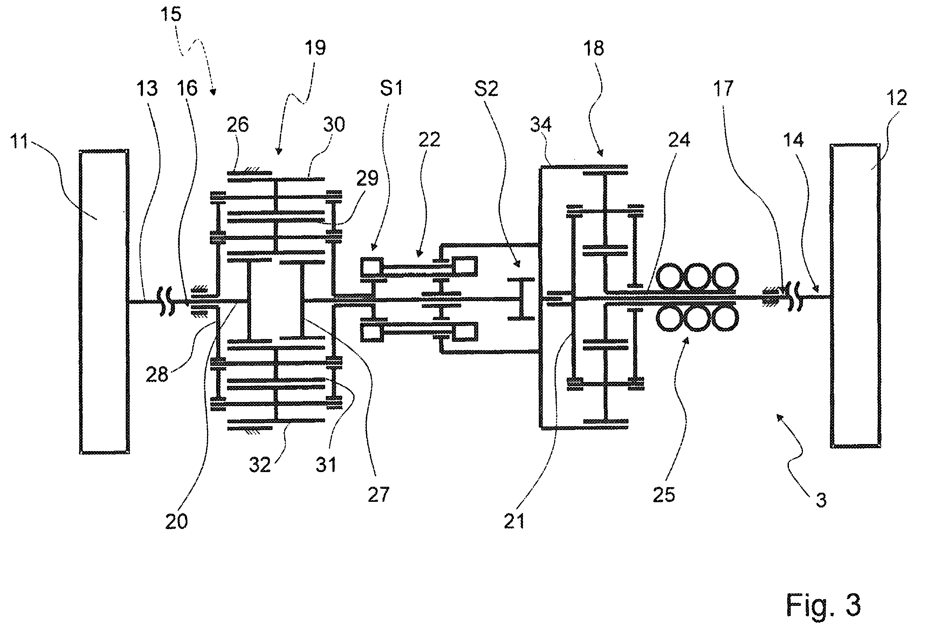

In Fig. 3 bis Fig. 7 sind mehrere Räderschemata verschiedener Ausführungsbeispiele der Getriebevorrichtung 15 gemäß Fig. 1 und Fig. 2 dargestellt, die zur Darstellung des Antriebsmodus und des Torque-Vectoring-Betriebsmodus einen gemeinsamen grundlegenden Aufbau aufweisen.

So sind die Getriebevorrichtungen 15 gemäß Fig. 3 bis Fig. 5 jeweils mit zwei Ausgangswellen 16, 17 und mit zwei miteinander in Wirkverbindung stehenden mehrwelligen Planetenradsätzen 18, 19 ausgebildet. Dabei ist bei den Ausführungsbeispielen der Getriebevorrichtung 15 gemäß Fig. 3 bis Fig. 6 jeweils eine Welle 20 eines zweiten Planetenradsatzes 19 oder eine Welle 21 eines ersten Planetenradsatzes 18 mit der Ausgangswelle 16 oder der Ausgangswelle 17 verbunden.

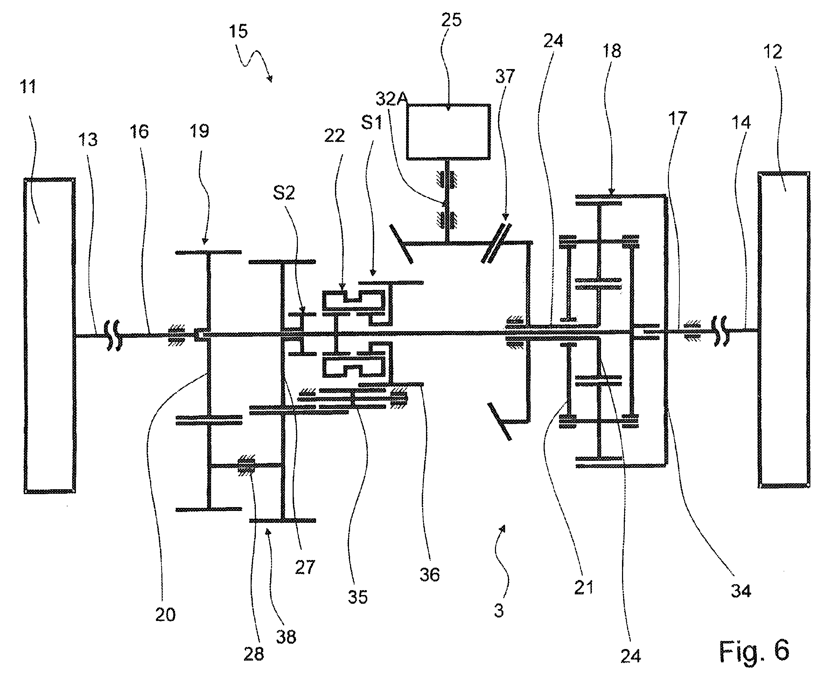

Zusätzlich ist bei den Ausführungsbeispielen der Getriebevorrichtung 15 gemäß Fig. 3 bis Fig. 6 zwischen den beiden Planetenradsätzen 18 und 19 eine Schalteinrichtung 22 angeordnet, welche zwischen zwei verschiedenen Betriebszuständen bzw. Schaltstellungen S1 und S2 umschaltbar ist und die beiden Ausgangswellen 16 und 17 der Getriebevorrichtung 15 über einen ersten Leistungspfad oder einen zweiten Leistungspfad der Getriebevorrichtung 15 miteinander verbindet. Bei der Getriebevorrichtung 15 gemäß Fig. 6 ist dagegen Welle 34 (Hohlrad) mit der Ausgangswelle 17 verbunden.

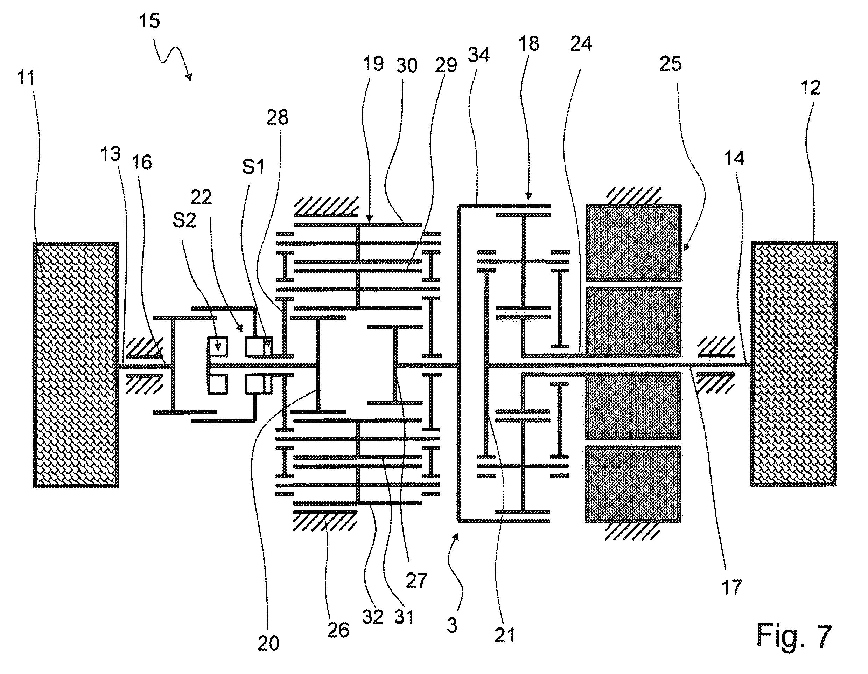

Bei der Getriebevorrichtung 15 gemäß Fig. 7 ist die Schalteinrichtung 22 zwischen dem zweiten Planetenradsatz 19 und dem Antriebsrad 11 der zweiten Fahrzeugachse 3 angeordnet, wobei die Ausgangswelle 16 der Getriebevorrichtung 15 in der zweiten Schaltstellung S2 mit der Welle 20 des zweiten Planetenradsatzes 19 und in der ersten Schaltstellung S1 der Schalteinrichtung 22 mit einer weiteren Welle 28 des Planetenradsatzes 19 wirkverbunden ist.

Zudem ist bei allen in der Zeichnung dargestellten Ausführungsbeispielen der Getriebevorrichtung 15 im Bereich einer weiteren Welle 24 des ersten Planetenradsatzes 18 ein Drehmoment einer elektrischen Maschine 25 in den ersten oder den zweiten Leistungspfad der Getriebevorrichtung 15 einleitbar, wobei das Drehmoment der elektrischen Maschine 25 bei zugeschaltetem ersten Leistungspfad zu gleichen Teilen und mit gleichen Vorzeichen und bei zugeschaltetem zweiten Leistungspfad zu gleichen Teilen mit unterschiedlichen Vorzeichen zwischen den Ausgangswellen 16, 17 verteilt und diesen zugeführt wird.

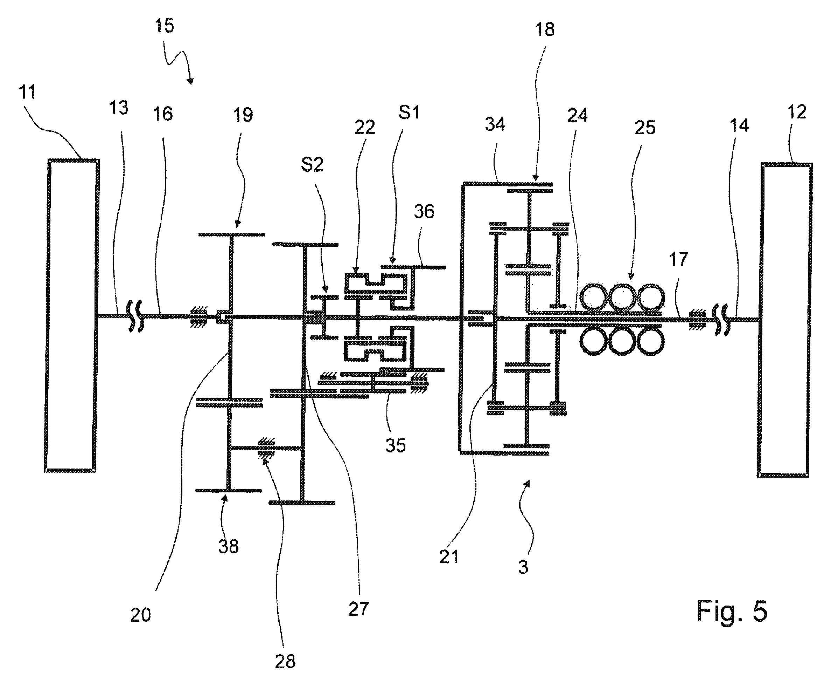

Darüber hinaus ist der erste Planetenradsatz 18 bei allen in der Zeichnung dargestellten Ausführungsbeispielen der Getriebevorrichtung 15 als einfacher Minusplanetenradsatz ausgebildet, während der zweite Planetenradsatz 19 bei den Ausführungsbeispielen der Getriebevorrichtung 15 gemäß Fig. 3, Fig. 4 und Fig. 7 als Doppelplanetenradsatz ausgeführt ist. Bei den Ausführungsbeispielen der Getriebevorrichtung 15 gemäß Fig. 5 und Fig. 6 ist der zweite Planetenradsatz als Plusplanetenradsatz ausgebildet.

Grundsätzlich werden alle in der Zeichnung dargestellten Ausführungsformen der Getriebevorrichtung 15 in der ersten Schaltstellung S1 der Schalteinrichtung 22 im Antriebsmodus betrieben, wobei die Antriebsräder 4, 5 der ersten Fahrzeugachse 2 über das Antriebsaggregat 9 und die Antriebsräder 11, 12 der zweiten Fahrzeugachse 3 von der elektrischen Maschine 25 mit Drehmoment versorgt bzw. beaufschlagt werden. Dabei besteht die Möglichkeit das Fahrzeug 1 sowohl im Zugbetrieb als auch im Schubbetrieb zu betreiben. Insbesondere im Schubbetrieb des Fahrzeuges ist während eines generatorischen Betriebes der elektrischen Maschine 25 Bremsenergie rekuperierbar.

Ist die Schalteinrichtung 22 in ihre zweite Schaltstellung S2 verschoben, wird über die Getriebevorrichtung 15 ein von der elektrischen Maschine 25 zur Verfügung gestelltes Drehmoment zu gleichen Teilen und mit unterschiedlichen Vorzeichen in Richtung der Antriebsräder 11 und 12 geführt und somit eines der Antriebsräder 11 oder 12 beschleunigt, während das andere Antriebsrad 12 oder 11 im gleichen Umfang abgebremst wird. Damit wird im Bereich der zweiten Fahrzeugachse 3 ein sogenanntes Torque-Vectoring durchgeführt, um in bekannter Art und Weise eine Fahrstabilität des Fahrzeuges 1 zu verbessern und während Kurvenfahrten ein agileres Verhalten des Fahrzeuges 1 zur Verfügung stellen zu können.

Bei dem Ausführungsbeispiel der Getriebevorrichtung 15 gemäß Fig. 3 ist die als Sonnenrad ausgeführte weitere Welle 24 des ersten Planetenradsatzes 18 mit der elektrischen Maschine 25 verbunden und der Abtrieb des ersten Planetenradsatzes 18 erfolgt über die als Steg ausgeführte Welle 21 in Richtung des Antriebsrades 12. Der als Doppelplanetenradsatz ausgebildete zweite Planetenradsatz 19 der Getriebevorrichtung 15 gemäß Fig. 3 umfasst neben einem drehfest ausgeführten Hohlrad 26 die als Sonnenrad ausgeführte Welle 20 sowie ein zweites Sonnenrad 27, wobei die beiden Sonneräder 20 und 27 mit unterschiedlicher Zähnezahl ausgebildet sind.

Zwischen dem Hohlrad 26 und den beiden Sonnenrädern 20 und 27 sind in dem Steg 28 mehrere Planetenradsätze mit jeweils zwei Planetenrädern 29, 30 und 31, 32 vorgesehen, wobei jeweils das erste Planetenrad 29 bzw. 31 mit den beiden Sonnenrädern 20 und 27 und das zweite Planetenrad 30 bzw. 32 mit dem ersten Planetenrad 29 bzw. 31 und dem Hohlrad 26 kämmt.

Das Hohlrad 34 des ersten Planetenradsatzes 18 wird in Abhängigkeit der jeweils vorliegenden Schaltstellung S1 oder S2 der Schalteinrichtung 22 wahlweise mit dem Steg 28 oder dem zweiten Sonnenrad 27, welches mit der kleineren Zähnezahl ausgeführt ist, verbunden, wobei der Abtrieb zum Antriebsrad 11 über das erste Sonnenrad 20 erfolgt.

Die in Fig. 3 dargestellte Ausführungsform der Getriebevorrichtung 15 weist aufgrund der vorbeschriebenen Ausgestaltung des zweiten Planetenradsatzes 19 eine sehr kompakte Bauweise mit nur zwei in axialer Richtung nebeneinander angeordneten Zahneingriffen auf. Des Weiteren ist von dem ersten Sonnenrad 20 zum zweiten Sonnenrad 27 ein positives Übersetzungsverhältnis darstellbar. Darüber hinaus ist von dem ersten Sonnenrad 20 zum Steg 28 das betragsgleiche aber vom Vorzeichen entgegengesetzte Übersetzungsverhältnis realisierbar.

In der ersten Schaltstellung S1 der Schalteinrichtung 22 wird das Antriebsmoment der elektrischen Maschine 25 entsprechend übersetzt in die Ausgangswelle 16 eingeleitet, wobei das dabei im Bereich eines gehäusefesten Bauteiles bzw. eines karosseriefesten Bauteiles abzustützende Drehmoment vom Hohlrad 26 des zweiten Planetenradsatzes 19 getriebeseitig aufgenommen wird. Das in der Größenordnung des Antriebsmomentes der elektrischen Maschine 25 vorliegende Hohlradmoment wird dadurch baulich sehr günstig mit vergleichsweise niedrigen Verzahnungskräften aufgebracht.

In der zweiten Schaltstellung S2 der Schalteinrichtung 22 bzw. im sogenannten Torque-Vectoring-Betriebsmodus der Getriebevorrichtung 15 wird im Bereich des Hohlrades 26 des zweiten Planetenradsatzes 19 ein Drehmoment abgestützt, welches im Wesentlichen dem Antriebsmoment der elektrischen Maschine 25 entspricht. Der wesentliche Teil der über den zweiten Leistungspfad geführten Leistung wird über die innenliegenden Planetenräder 29 und 31 zwischen den beiden Sonnerädern 20 und 27 übertragen. Da die Leistungsübertragung somit im wesentlichen über zwei Zahneingriffe erfolgt, ist der Verzahnungswirkungsgrad des Koppelgetriebes bzw. des zweiten Planetenradsatzes 19 entsprechend gut.

Während einer Umschaltung zwischen der ersten Schaltstellung S1 und der zweiten Schaltstellung S2 der Schalteinrichtung 22 ist von der elektrischen Maschine 25 lediglich das Hohlrad 34 des ersten Planetenradsatzes 18 aufgrund einer Drehrichtungsumkehr zu synchronisieren. Aus diesem Grund ist das am Antriebsrad 12 abzustützende Reaktionsmoment entsprechend niedrig.

Grundsätzlich ist der Verzahnungswirkungsgrad des zweiten Planetenradsatzes 19 in der ersten Schaltstellung S1 der Schalteinrichtung 22 schlechter als der Verzahnungswirkungsgrad des Konzeptes der Getriebevorrichtung 15 gemäß Fig. 7 und beträgt in etwa 93 %. Der Gesamtwirkungsgrad der Getriebevorrichtung 15 gemäß Fig. 3 ist jedoch größer als 93 %, da die Antriebsleistung der elektrischen Maschine 25 nur in etwa zur Hälfte über den zweiten Planetenradsatz 19 geführt wird.

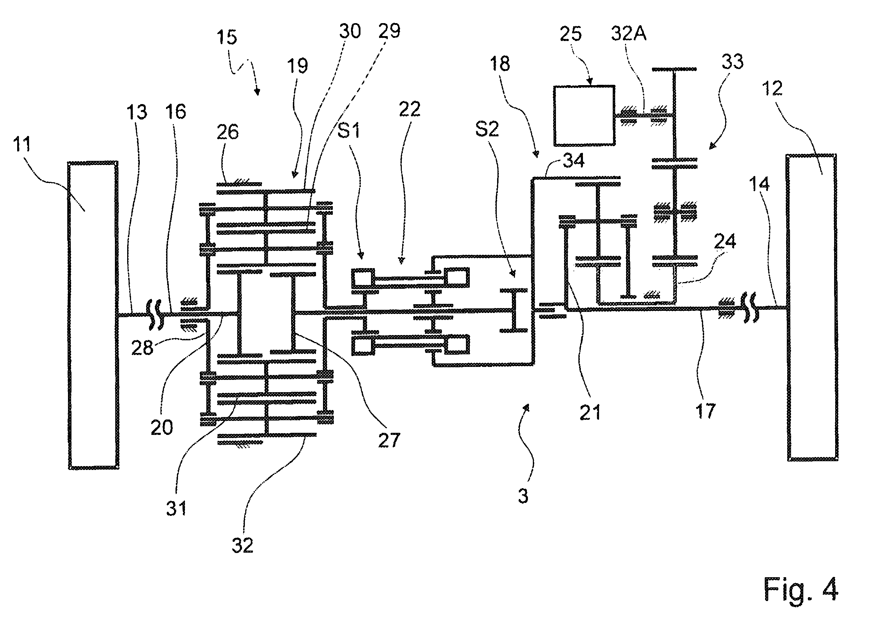

Das in Fig. 4 gezeigte zweite Ausführungsbeispiel der Getriebevorrichtung 15 entspricht im Wesentlichen der Getriebevorrichtung 15 gemäß Fig. 3, so dass bezüglich der Funktionsweise auf die Beschreibung zu Fig. 1 verwiesen wird und nachfolgend lediglich auf die wesentlichen Unterschiede zwischen diesen beiden Ausführungsbeispielen eingegangen wird.

Bei der Ausführung der Getriebevorrichtung 15 gemäß Fig. 3 ist die elektrische Maschine 25 koaxial zu dem als Hohlwelle ausgebildeten Sonnenrad 24 des ersten Planetenradsatz 18 und der durch das Sonnenrad 24 geführten Ausgangswelle 17 bauraumgünstig angeordnet, während die elektrische Maschine 25 bei der Ausführung der Getriebevorrichtung 15 gemäß Fig. 4 vorliegend achsparallel zur Ausgangswelle 17 und radial außerhalb des ersten Planetenradsatzes 18 sowie des zweiten Planetenradsatzes 19 angeordnet ist. Eine Motorausgangswelle 32A der elektrischen Maschine 25 ist achsparallel zur Antriebswelle 14 bzw. zur Ausgangswelle 17 angeordnet, wobei zwischen dem Sonnenrad 24 des ersten Planetenradsatzes 18 und der Motorausgangswelle 32A der elektrischen Maschine 25 vorliegend eine Stirnradstufe 33 vorgesehen ist, um die Einleitung des Drehmomentes der elektrischen Maschine 25 in den ersten oder in den zweiten Leistungspfad der Getriebevorrichtung 15 über das Sonnenrad 24 durchführen zu können. Alternativ hierzu besteht auch die Möglichkeit, anstatt der Stirnradstufe 33 einen Ketten- oder Riementrieb zwischen der Motorausgangswelle 32A und dem Sonnenrad 24 vorzusehen.

Unabhängig von der konstruktiven Ausführung der Übertragung bzw. der Verbindung zwischen der Motorausgangswelle 32A und dem Sonnenrad 24 bietet die zusätzliche Übersetzung in diesem Bereich die Möglichkeit, den Antriebsmodus oder den Torque-Vectoring-Betriebsmodus der Getriebevorrichtung 15 im Vergleich zu der Ausgestaltung der Getriebevorrichtung 15 gemäß Fig. 3 mit einem geringeren Drehmoment ausgeführten elektrischen Maschine durchführen zu können.

Damit sind die Planetenradsätze 18 und 19 der Getriebevorrichtung 15 gemäß Fig. 4 in Abhängigkeit des jeweils vorliegenden Fahrzeugkonzeptes mit verschiedenen elektrischen Maschinen mit unterschiedlicher Drehmomentkapazitäten kombinierbar. Darüber hinaus besteht auch die Möglichkeit, außerhalb des Bereiches der Ausgangswelle 17 und der Antriebswelle 14 zur Verfügung stehende Bauräume für die Anordnung einer elektrischen Maschine zu nutzen, die im Bereich der Ausgangswelle 17 und der Antriebswelle14 der zweiten Fahrzeugachse 3 eventuell nicht zur Verfügung stehen.

Die Getriebevorrichtung 15 gemäß Fig. 4 weist im Vergleich zu der Getriebevorrichtung 15 gemäß Fig. 3 einen kleineren Gesamtwirkungsgrad auf, da die elektrische Leistung bzw. das von der elektrischen Maschine 25 erzeugte Drehmoment über zwei zusätzliche Zahneingriffe der Stirnradstufe 30 oder den zusätzlichen Ketten- oder Riementrieb in den ersten oder den zweiten Leistungspfad eingeleitet wird.

Bei dem in Fig. 5 dargestellten Ausführungsbeispiel der Getriebevorrichtung 15 ist der zweite Planetenradsatz 19 als Plusplanetenradsatz mit zwei Sonnenrädern 20 und 27 ausgeführt, die jeweils unterschiedliche Zähnezahlen aufweisen und mit Stufenplanetenrädern 38 kämmen. Zur Drehmomentumkehr wird bei diesem Ausführungsbeispiel ein zusätzliches Planetenrad 35 mit einem weiteren Sonnenrad 36 vorgesehen, welches in der ersten Schaltstellung S1 der Schalteinrichtung 22 mit dem Steg 21 des ersten Planetenradsatzes 18 in Wirkverbindung steht.

Die Ausgestaltung des zweiten Planetenradsatzes 19 gemäß Fig. 5 weist in der ersten Schaltstellung S1 der Schalteinrichtung 22 einen Verzahnungswirkungsgrad von etwa 97 % auf und ist höher als der Verzahnungswirkungsgrad der beiden Ausführungsbeispiele gemäß Fig. 3 und Fig. 4. Darüber hinaus ist der zweite Planetenradsatz 19 der Getriebevorrichtung 15, gemäß Fig. 5 auch durch einen höheren Bauraumbedarf gekennzeichnet, da der zweite Planetenradsatz 19 gemäß Fig. 5 im Vergleich zu den Ausführungen des zweiten Planetenradsatzes 19 gemäß Fig. 3 und Fig. 4 mit drei in axialer Richtung nebeneinander angeordneten Zahneingriffen ausgebildet ist.

Das in der ersten Schaltstellung S1 der Schalteinrichtung 22 im Bereich des Gehäuses der Getriebevorrichtung 15 abzustützende Drehmoment wird über die Lagerung der Stufenplanetenräder 38 des zweiten Planetenradsatzes 19 in das Gehäuse der Getriebevorrichtung 15 eingeleitet. Dies erfordert jedoch einen konstruktiv höheren Aufwand als bei den Ausführungsbeispielen der Getriebevorrichtung 15 gemäß Fig. 3, Fig. 4 und Fig. 7. Andererseits ist die Teileanzahl des zweiten Planetenradsatzes 19 gemäß Fig. 5 höher als des zweiten Planetenradsatzes 19 gemäß Fig. 3, Fig. 4 und Fig. 7.

Das in Fig. 6 dargestellte vierte Ausführungsbeispiel der Getriebevorrichtung 15 stellt grundsätzlich eine Weiterbildung des in Fig. 5 gezeigten dritten Ausführungsbeispieles der Getriebevorrichtung 15 dar, wobei der erste Planetenradsatz 18 gemäß Fig. 6 im Vergleich zur Ausführung der Getriebevorrichtung 15 aus Fig. 5 spiegelbildlich ausgebildet ist. D. h., dass das Hohlrad 34 des ersten Planetenradsatzes 18 mit der Ausgangswelle 17 der Getriebevorrichtung 1 verbunden ist und der Steg 21 des ersten Planetenradsatzes 18 mit dem zweiten Planetenradsatz 19 verschaltet ist. Zusätzlich ist das Sonnenrad 24 des ersten Planetenradsatzes 18 über eine Kegelradstufe 37 mit der elektrischen Maschine 25 bzw. deren Motorausgangswelle 32A wirkverbunden, womit die elektrische Maschine bzw. die Motorausgangswelle 32A lotrecht zur Ausgangswelle 17 bzw. um 90° gegenüber der Radachse gedreht anordenbar ist.

Dadurch ergibt sich in Abhängigkeit des jeweils vorliegenden Anwendungsfalles unter Umständen eine bauraumgünstigere Anordnung der elektrischen Maschine im 90° Winkel zur Fahrzeugvorder- oder Fahrzeughinterachse im Bereich der axialen Mitte der Getriebevorrichtung 15, wobei die zusätzliche Kegelradstufe 37 eine Verschlechterung des Gesamtwirkungsgrades der Getriebevorrichtung 15 gemäß Fig. 6 im Vergleich zu den vorbeschriebenen Ausführungsformen der Getriebevorrichtung 15 führt. Des Weiteren ist das im Bereich der Schalteinrichtung 22 vorliegende Drehmoment übersetzungsbedingt höher als das im Bereich der Antriebsräder 11 und 12 anliegende Drehmoment.

Bei dem in Fig. 7 dargestellten Ausführungsbeispiel der Getriebevorrichtung 15 ist im Bereich des zweiten Planetenradsatzes 19 sowohl in der ersten Schaltstellung S1 als auch in der zweiten Schaltstellung S2 der Schalteinrichtung 22 durch eine veränderte Übersetzung und einem geringeren Wälzleistungsfluss im Vergleich zu den Ausführungsbeispielen der Getriebevorrichtung 15 gemäß Fig. 3 und Fig. 4 ein höherer Wirkungsgrad erzielbar, woraus ein hoher Getriebegesamtwirkungsgrad der Getriebevorrichtung 15 gemäß Fig. 7 resultiert.

Darüber hinaus stellt die Getriebevorrichtung gemäß Fig. 7 im Vergleich zu der Getriebevorrichtung gemäß Fig. 3 und Fig. 4 eine bauraumgünstigere Ausführung dar, da die Schalteinrichtung 22 nicht zwischen den beiden Planetengetrieben 18 und 19 angeordnet und radseitig kompakter ausführbar ist.

Neben geringeren Lagerdrehzahlen im Bereich der Planetenräder 29 bis 32 ist auch eine Drehzahl des Steges 28 des zweiten Planetenradsatzes 19 um etwa 33 % geringer als bei den Getriebevorrichtungen 15 gemäß Fig. 3 und Fig. 4. Dies führt auf einfache Art und Weise dazu, dass in der Getriebevorrichtung 15 einerseits geringere Pantschverluste auftreten und andererseits eine Zentrifugalkraft im Bereich der Planetenräder 29 bis 32 bei hohen Drehgeschwindigkeiten wesentlich niedriger ist.

Im Gegensatz dazu sind bei einem Umschaltvorgang zwischen den beiden Schaltstellungen S1 und S2 der Schalteinrichtung 22 nicht nur das Hohlrad 34 des ersten Planetenradsatzes 18 sondern auch weitere Bauteile des zweiten Planetenradsatzes 19 zu synchronisieren. Dadurch ist bei gleicher Synchronisationsdauer im Vergleich zu den Getriebevorrichtungen 1 gemäß Fig. 3 und Fig. 4 im Bereich eines Antriebsrades 11 oder 12 ein höheres Trägheitsmoment abzustützen.

Mit der erfindungsgemäßen Getriebevorrichtung ist der Antriebs-Modus und auch der Torque-Vectoring-Betriebsmodus mit geringem Bauraumbedarf, mit einem niedrigen Gesamtgewicht sowie mit geringen Herstellkosten mit einem einzigen System darstellbar.

Hierfür wird eine elektrische Maschine mit einer Welle eines einfachen Planetenradsatzes, die nicht die Summenwelle des Planetengetriebesatzes darstellt, verbunden, der die Differenzialfunktion der Getriebevorrichtung nach der Erfindung im Bereich einer Fahrzeugachse übernimmt. Eine zweite Welle des einfachen Planetenradsatzes bzw. des Minusplanetenradsatzes ist mit einem Antriebsrad der Fahrzeugachse verbunden, in dessen Bereich die Getriebevorrichtung angeordnet ist. Zwischen der dritten Welle des Minusplanetenradsatzes und dem anderen Antriebsrad der Fahrzeugachse ist ein zweiter Planetenradsatz zwischengeschaltet, der zum einen die ungleiche Momentenverteilung des ersten einfachen Minusplanetenradsatzes ausgleicht und in einem zweiten Schaltzustand der Schalteinrichtung zusätzlich das Vorzeichen des einem Antriebsrad zugeführten Drehmoments umdreht, um den Torque-Vectoring-Betriebsmodus zu ermöglichen.

Grundsätzlich ist die erfindungsgemäße Getriebevorrichtung durch eine Mehrfachfunktionalität mit nur einem Elektromotor gekennzeichnet. Dabei sind in den verschiedenen Betriebsmodi der eine kompakte Bauweise sowie ein geringes Eigengewicht aufweisenden Getriebevorrichtung nach der Erfindung jeweils passende Übersetzungsverhältnisse zur Verfügung stellbar. Darüber hinaus ist die kostengünstig herstellbare Getriebevorrichtung in allen Betriebspunkten mit einem hohen Wirkungsgrad betreibbar.

### Bezugszeichen

- 1: Fahrzeug
- 2: erste Fahrzeugachse
- 3: zweite Fahrzeugachse
- 4, 5: Antriebsrad
- 6, 7: Antriebswelle
- 8: Differenzialgetriebeeinheit
- 9: Antriebsaggregat
- 10: Getriebeeinrichtung
- 11, 12: Antriebsrad
- 13, 14: Antriebswelle
- 15: Getriebevorrichtung
- 16, 17: Ausgangswelle
- 18: erster Planetenradsatz
- 19: zweiter Planetenradsatz
- 20: Welle des zweiten Planetenradsatzes
- 21: Welle des ersten Planetenradsatzes
- 22: Schalteinrichtung
- 24: weitere Welle des ersten Planetenradsatzes
- 25: elektrische Maschine
- 26: Hohlrad des zweiten Planetenradsatzes
- 27: zweites Sonnenrad des zweiten Planetenradsatzes
- 28: Steg des zweiten Planetenradsatzes
- 29 bis 32: Planetenrad
- 32A: Motorausgangswelle der elektrischen Maschine
- 33: Stirnradstufe
- 34: Hohlrad des ersten Planetenradsatzes
- 35: zusätzliches Planetenrad
- 36: weiteres Sonnenrad
- 37: Kegelradstufe
- 38: Stufenplanetenrad
- S1: erste Schaltstellung der Schalteinrichtung
- S2: zweite Schaltstellung der Schalteinrichtung

## Patentansprüche

1. Getriebevorrichtung (15) mit zwei Ausgangswellen (16, 17) und genau zwei miteinander in Wirkverbindung stehenden mehrwelligen Planetenradsätzen (18, 19), wobei jeweils eine Welle (20, 21) eines Planetenradsatzes (18, 19) mit einer Ausgangswelle (16, 17) in Wirkverbindung bringbar ist und eine Schalteinrichtung (22) vorgesehen ist, über welche zwischen einem ersten Leistungspfad oder einem zweiten Leistungspfad zwischen den Ausgangswellen (16, 17) umschaltbar ist, wobei im Bereich einer weiteren Welle (24) eines der Planetenradsätze (18) ein Drehmoment einer elektrischen Maschine (25) in den ersten oder den zweiten Leistungspfad einleitbar ist, und wobei das Drehmoment der elektrischen Maschine (25) bei geschaltetem ersten Leistungspfad zu gleichen Teilen und mit gleichem Vorzeichen und bei geschaltetem zweiten Leitungspfad zu gleichen Teilen mit unterschiedlichen Vorzeichen zu den Ausgangswellen (16, 17) geführt wird, **dadurch gekennzeichnet, dass** der Planetenradsatz (18), in dessen Bereich das Drehmoment der elektrischen Maschine (25) einleitbar ist, als einfacher Minusplanetenradsatz ausgebildet ist.

2. Getriebevorrichtung nach Anspruch 1, **dadurch gekennzeichnet, dass** ein Steg (21) des Minusplanetenradsatzes (18) mit einer der Ausgangswellen (17) verbunden ist.

3. Getriebevorrichtung nach Anspruch 1 oder 2, **dadurch gekennzeichnet, dass** ein Sonnenrad (24) des Minusplanetenradsatzes (18) mit einer Hohlwelle ausgebildet ist, durch welche eine Verbindung zwischen dem Steg (21) und der Ausgangswelle (17) geführt ist.

4. Getriebevorrichtung nach einem der Ansprüche 1 bis 3, **dadurch gekennzeichnet, dass** ein Hohlrad (34) des Minusplanetenradsatzes (18) über die Schalteinrichtung (22) mit einer ersten Welle (28) oder einer zweiten Welle (27) des zweiten Planetenradsatzes (19) in Wirkverbindung bringbar ist.

5. Getriebevorrichtung nach Anspruch 1, **dadurch gekennzeichnet, dass** ein Steg (21) des Minusplanetenradsatzes (18) über die Schalteinrichtung (22) mit einer ersten Welle (36) oder einer zweiten Welle (27) des zweiten Planetenradsatzes (19) in Wirkverbindung bringbar ist.

6. Getriebevorrichtung nach einem der Ansprüche 1 bis 5, **dadurch gekennzeichnet, dass** der zweite Planetenradsatz (19) als Doppelplanetenradsatz ausgeführt ist.

7. Getriebevorrichtung nach Anspruch 6, dadurch **gekennzeich**n e t , dass ein Hohlrad des Doppelplanetenradsatzes (19) drehfest ausgeführt ist.

8. Getriebevorrichtung nach einem der Ansprüche 1 bis 5, **dadurch gekennzeichnet, dass** der zweite Planetenradsatz (19) als Plusplanetenradsatz ausgebildet ist.

9. Getriebevorrichtung nach einem der Ansprüche 5 bis 8, **dadurch gekennzeichnet, dass** die erste Welle des zweiten Planetenradsatzes (19) ein Sonnenrad (27) und die zweite Welle des zweiten Planetenradsatzes (19) ein Sonnenrad (20) ist.

10. Getriebevorrichtung nach Anspruch 1, **dadurch gekennzeichnet, dass** ein Hohlrad (34) des Minusplanetenradsatzes (18) mit einer der Ausgangswellen (17) verbunden ist.

11. Getriebevorrichtung nach einem der Ansprüche 1 bis 10, **dadurch gekennzeichnet, dass** die Schalteinrichtung (22) zwischen den Planetenradsätzen (18, 19) angeordnet ist.

12. Getriebevorrichtung nach einem der Ansprüche 1 bis 10 , **dadurch gekennzeichnet, dass** die Schalteinrichtung (22) zwischen einem der Planetenradsätze (19) und einer der Ausgangswellen (16) angeordnet ist.

13. Getriebeeinrichtung nach Anspruch 12, **dadurch gekennzeichnet, dass** ein Sonnenrad (20) des zweiten Planetenradsatzes (19) oder ein Steg (28) des zweiten Planetenradsatzes (19) über die Schalteinrichtung (22) mit einer der Ausgangswellen (16) verbindbar ist.

## Claims

1. Transmission device (15) comprising two output shafts (16, 17) and precisely two multi-shaft planetary gear trains (18, 19) which are operatively connected to each other, wherein each shaft (20, 21) of a planetary gear train (18, 19) can be respectively brought into operative connection with an output shaft (16, 17), and a switching means (22) is provided, via which a switch can be made between a first power path or a second power path between the output shafts (16, 17), wherein, in the region of a further shaft (24) of one of the planetary gear trains (18), a torque from an electric engine (25) can be introduced into the first or the second power path, and wherein the torque from the electric engine (25) is guided to the output shafts (16, 17) when the first power path is switched to identical parts and with the same polarity sign and when the second power path is switched to identical parts with different polarity signs, **characterized in that** the planetary gear train (18), into the region of which the torque from the electric engine (25) can be introduced, is designed in the form of a single minus planetary gear train.

2. Transmission device according to Claim 1, **characterized in that** a web (21) of the minus planetary gear train (18) is connected to one of the output shafts (17).

3. Transmission device according to Claim 1 or 2, **characterized in that** a sun wheel (24) of the minus planetary gear train (18) is formed with a hollow shaft, through which a connection between the web (21) and the output shaft (17) is guided.

4. Transmission device according to one of Claims 1 to 3, **characterized in that** a ring gear (34) of the minus planetary gear train (18) can be brought via the switching means (22) into operative connection with a first shaft (20) or a second shaft (27) of the second planetary gear train (19).

5. Transmission device according to Claim 1, **characterized in that** a web (21) of the minus planetary gear train (18) can be brought via the switching means (22) into operative connection with a first shaft (20) or a second shaft (27) of the second planetary gear train (19).

6. Transmission device according to one of Claims 1 to 5, **characterized in that** the second planetary gear train (19) is designed as a double planetary gear train.

7. Transmission device according to Claim 6, **characterized in that** a ring gear of the double planetary gear train (19) is of rotationally fixed design.

8. Transmission device according to one of Claims 1 to 5, **characterized in that** the second planetary gear train (19) is designed as a plus planetary gear train.

9. Transmission device according to one of Claims 5 to 8, **characterized in that** the first shaft of the second planetary gear train (19) is a sun wheel (27) and the second shaft of the second planetary gear train (19) is a sun wheel (20).

10. Transmission device according to Claim 1, **characterized in that** a ring gear (34) of the minus planetary gear train (18) is connected to one of the output shafts (17).

11. Transmission device according to one of Claims 1 to 10, **characterized in that** the switching means (22) is arranged between the planetary gear trains (18, 19).

12. Transmission device according to one of Claims 1 to 10, **characterized in that** the switching means (22) is arranged between one of the planetary gear trains (19) and one of the output shafts (16).

13. Transmission device according to Claim 12, **characterized in that** a sun wheel (20) of the second planetary gear train (19) or a web (28) of the second planetary gear train (19) can be connected via the switching means (22) to one of the output shafts (16).

## Revendications

1. Dispositif de transmission (15) comprenant deux arbres de sortie (16, 17) et exactement deux trains planétaires (18, 19) à plusieurs arbres en liaison fonctionnelle l'un avec l'autre, un arbre (20, 21) d'un train planétaire (18, 19) pouvant à chaque fois être amené en liaison fonctionnelle avec un arbre de sortie (16, 17) et un dispositif de commutation (22) étant prévu, lequel permet de commuter entre une première voie de puissance ou une deuxième voie de puissance entre les arbres de sortie (16, 17), un couple d'un moteur électrique (25) pouvant être introduit dans la première ou la deuxième voie de puissance dans la région d'un autre arbre (24) de l'un des trains planétaires (18), et le couple du moteur électrique (25), lorsque la première voie de puissance est commutée, étant guidé à parts égales et avec des signes identiques vers les arbres de sortie (16, 17), et lorsque la deuxième voie de puissance est commutée, étant guidé à parts égales et avec des signes opposés vers les arbres de sortie (16, 17), **caractérisé en ce que** le train planétaire (18), dans la région duquel le couple du moteur électrique (25) peut être introduit, est réalisé sous forme de train planétaire négatif simple.

2. Dispositif de transmission selon la revendication 1, **caractérisé en ce qu'**un porte-satellites (21) du train planétaire négatif (18) est relié à l'un des arbres de sortie (17).

3. Dispositif de transmission selon la revendication 1 ou 2, **caractérisé en ce qu'**une roue solaire (24) du train planétaire négatif (18) est réalisée avec un arbre creux au moyen duquel une liaison entre le porte-satellites (21) et l'arbre de sortie (17) est effectuée.

4. Dispositif de transmission selon l'une quelconque des revendications 1 à 3, **caractérisé en ce qu'**une couronne (34) du train planétaire négatif (18) peut être amenée en liaison fonctionnelle avec un premier arbre (28) ou un deuxième arbre (27) du deuxième train planétaire (19) au moyen du dispositif de commutation (22).

5. Dispositif de transmission selon la revendication 1, **caractérisé en ce qu'**un porte-satellites (21) du train planétaire négatif (18) peut être amené en liaison fonctionnelle avec un premier arbre (36) ou un deuxième arbre (27) du deuxième train planétaire (19) au moyen du dispositif de commutation (22).

6. Dispositif de transmission selon l'une quelconque des revendications 1 à 5, **caractérisé en ce que** le deuxième train planétaire (19) est réalisé sous forme de train planétaire double.

7. Dispositif de transmission selon la revendication 6, **caractérisé en ce qu'**une couronne du train planétaire double (19) est réalisée de manière bloquée en rotation.

8. Dispositif de transmission selon l'une quelconque des revendications 1 à 5, **caractérisé en ce que** le deuxième train planétaire (19) est réalisé sous forme de train planétaire positif.

9. Dispositif de transmission selon l'une quelconque des revendications 5 à 8, **caractérisé en ce que** le premier arbre du deuxième train planétaire (19) est une roue solaire (27) et le deuxième arbre du deuxième train planétaire (19) est une roue solaire (20).

10. Dispositif de transmission selon la revendication 1, **caractérisé en ce qu'**une couronne (34) du train planétaire négatif (18) est reliée à l'un des arbres de sortie (17).

11. Dispositif de transmission selon l'une quelconque des revendications 1 à 10, **caractérisé en ce que** le dispositif de commutation (22) est disposé entre les trains planétaires (18, 19).

12. Dispositif de transmission selon l'une quelconque des revendications 1 à 10, **caractérisé en ce que** le dispositif de commutation (22) est disposé entre l'un des trains planétaires (19) et l'un des arbres de sortie (16).

13. Dispositif de transmission selon la revendication 12, **caractérisé en ce qu'**une roue solaire (20) du deuxième train planétaire (19) ou un porte-satellites (28) du deuxième train planétaire (19) peuvent être reliés à l'un des arbres de sortie (16) au moyen du dispositif de commutation (22).
